(19) Europäisches Patentamt
European Patent Office
Office européen des brevets

(11) **EP 4 077 744 B1**

(12) **EUROPEAN PATENT SPECIFICATION**

(45) Date of publication and mention
of the grant of the patent:
**11.02.2026  Bulletin 2026/07**

(21) Application number: **20825269.2**

(22) Date of filing: **17.12.2020**

(51) International Patent Classification (IPC):
*C21D 8/02* (2026.01)     *C22C 38/02* (2006.01)
*C22C 38/06* (2006.01)     *C22C 38/22* (2006.01)
*C22C 38/32* (2006.01)     *C22C 38/38* (2006.01)

(52) Cooperative Patent Classification (CPC):
**C21D 8/0226; C22C 38/02; C22C 38/06;**
**C22C 38/22; C22C 38/32; C22C 38/38;**
C21D 2211/001; C21D 2211/002; C21D 2211/008

(86) International application number:
**PCT/IB2020/062111**

(87) International publication number:
**WO 2021/124199 (24.06.2021 Gazette 2021/25)**

(54) **HIGH TOUGHNESS HOT ROLLED STEEL SHEET AND METHOD OF MANUFACTURING THE SAME**

WARMGEWALZTES STAHLBLECH MIT HOHER ZÄHIGKEIT UND VERFAHREN ZUM HERSTELLEN DESSELBEN

TÔLE D'ACIER LAMINÉE À CHAUD À HAUTE RÉSISTANCE ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA**

(30) Priority: **19.12.2019  PCT/IB2019/061095**

(43) Date of publication of application:
**26.10.2022  Bulletin 2022/43**

(73) Proprietor: **ArcelorMittal**
**1160 Luxembourg (LU)**

(72) Inventors:
• **PERLADE, Astrid**
  **57050 Le Ban-Saint-Martin (FR)**
• **ZHU, Kangying**
  **57000 Metz (FR)**
• **JUNG, Coralie**
  **57000 Metz (FR)**
• **KEGEL, Frédéric**
  **57970 Yutz (FR)**

(74) Representative: **Lavoix**
**2, place d'Estienne d'Orves**
**75441 Paris Cedex 09 (FR)**

(56) References cited:
EP-A- 2 698 440        EP-A1- 3 112 488
WO-A1-2018/162937      WO-A1-2018/220430
US-A1- 2013 319 582    US-A1- 2015 329 950

**Description**

The present invention relates to a high strength steel sheet having high toughness and good weldability and to a method to obtain such steel sheet.

To manufacture various items such as parts of body structural members and body panels for automotive vehicles, it is known to use sheets made of DP (Dual Phase) steels or TRIP (Transformation Induced Plasticity) steels.

One of major challenges in the automotive industry is to decrease the weight of vehicles in order to improve their fuel efficiency in view of the global environmental conservation, without neglecting the safety requirements. To meet these requirements, new high strength steels are continuously developed by the steelmaking industry, to have sheets with improved yield and tensile strengths, and good ductility and formability.

One development made to improve mechanical properties is to increase manganese content in steels. The presence of manganese helps to increase ductility of steels thanks to the stabilization of austenite. But these medium manganese steels present weaknesses of brittleness.

The publication WO2007101921 describes a method to obtain hot rolled sheets of steels "multiphase", with in particular, a manganese content comprised between 1% and 3%. The microstructure consists of at least 75% bainite, residual austenite in an amount greater than or equal to 5% and martensite greater than or equal to 2%. To attain a Charpy V notch fracture energy greater than 28J (corresponding to 0.52J/mm$^2$) and the targeted microstructure, the cooling of the hot rolled steel sheet must be controlled. Two cooling stages are actually necessary to obtain the desired properties, which complicates the manufacturing process. A similar steel composition is disclosed in WO2018220430 A1.

The purpose of the invention therefore is to solve the above-mentioned problem and to provide a steel sheet having high toughness with Charpy impact energy at 20°C higher than 0.50J/mm$^2$, tensile strength TS above or equal to 1450MPa, high uniform elongation above or equal to 5%, and easily processable on conventional process route. Another purpose of the invention is to provide a steel sheet having good weldability.

The object of the present invention is achieved by providing a steel sheet according to claim 1. The steel sheet can also comprise characteristics of anyone of claims 2 to 6. Another object is achieved by providing the method according to claim 7. An other object of the invention is achieved by providing a steel sheet comprising characteristics of claim 8.

The invention will now be described in detail and illustrated by examples without introducing limitations.

Hereinafter, Ms designates the martensite start temperature, i.e. the temperature at which the austenite begins to transform into martensite upon cooling. This temperature can be calculated from a formula, based on the weight percent of the corresponding elements:

$$Ms = 560 - (30*\%Mn + 13*\%Si - 15*\%Al + 12*\%Mo) - 600*(1 - exp(-0,96*\%C))$$

The composition of the steel according to the invention will now be described, the content being expressed in weight percent.

The carbon content is comprised between 0.10% and 0.25 %. If the carbon content is too high, the weldability of the steel sheet is insufficient. If the carbon content is lower than 0.10%, the austenite fraction is not stabilized enough to obtain targeted properties. In a preferred embodiment of the invention, the carbon content is between 0.15% and 0.20%.

The manganese content is comprised between 3.5% and 5.0 %. Above 5.0% of addition, the risk of central segregation increases to the detriment of the toughness. Below 3.5%, the final structure comprises an insufficient retained austenite fraction to obtain the desired properties. In a preferred embodiment of the invention the manganese content is between 3.5% and 4.5%.

According to the invention, the silicon content is comprised between 0.80% and 1.60%. A silicon addition of at least 0.80% helps to stabilize a sufficient amount of retained austenite. Above 1.60%, silicon is detrimental for toughness. Moreover, silicon oxides form at the surface, which impairs the coatability of the steel. In a preferred embodiment of the invention, the silicon content is between 1.00% and 1.60%.

According to the invention, the boron content is comprised between 0.0003% and 0.004%. The presence of boron delays bainitic transformation to a lower temperature and the bainite formed at low temperature has a lath morphology which increases the toughness. Moreover, boron improves weldability of the steel sheet. Above 0.004%, the formation of borocarbides at the prior austenite grain boundaries is promoted, making the steel more brittle. Below 0.0003%, there is not a sufficient concentration of free B that segregates at the prior austenite grain boundaries to increase toughness of the steel. In a preferred embodiment of the invention, the boron content is between 0.001% and 0.003%.

Optionally some elements can be added to the composition of the steel according to the invention.

Titanium can be added optionally up to 0.04% to provide precipitation strengthening. Preferably a minimum of 0.01% of titanium is added in addition of boron to protect boron against the formation of BN.

Niobium can be added up to 0.05% to refine the austenite grains during hot-rolling and to provide precipitation strengthening. Preferably, the minimum amount of niobium added is 0.0010%.

Molybdenum can optionally be added, in a limit of maximum 0.3 %. Molybdenum stabilizes the austenite and increases toughness of the steel. Moreover, molybdenum improves weldability of the steel sheet. Above 0.3%, the addition of molybdenum is costly and ineffective in view of the properties which are required. Aluminium can optionally be added up to 0.90 %, as it is a very effective element for deoxidizing the steel in the liquid phase during elaboration. Moreover, aluminium improves weldability of the steel sheet. The aluminium content is lower than 0.90% to avoid the occurrence of inclusions and to avoid oxidation problems. Preferably, the aluminium content is comprised between 0.10% and 0.90%. More preferably, the aluminium content is comprised between 0.20% and 0.90%. More preferably, the aluminium content is comprised between 0.30% and 0.90%, even more between 0.40% and 0.90%.

According to the invention, a maximum of 0.80% of chromium is allowed. Above, a saturation effect is noted, and adding chromium is both useless and expensive.

The remainder of the composition of the steel is iron and impurities resulting from the smelting. In this respect, P, S and N at least are considered as residual elements which are unavoidable impurities. Their content is less than 0.010 % for S, less than 0.020 % for P and less than 0.008 % for N.

In particular phosphorus segregates at grain boundary and for a phosphorus content higher than 0.020%, the toughness of the steel is reduced.

The microstructure of the hot rolled steel sheet according to the invention will now be described. Hereinafter, the aspect ratio is the ratio of the maximum length $L_{max}$ of a grain to the maximum width $W_{max}$ of the grain measured at 90° of said maximum length.

The hot rolled steel sheet has a microstructure consisting of, in surface fraction, between 50% and 80% of lath bainite, lower than 30% of granular bainite, and the rest being martensite, martensite - austenite islands (M-A) and austenite films, the sum of which being comprised from 15% to 35%. Moreover, less than 20% of martensite and M-A islands have the multiplication of the maximum length $L_{max}$ of the grain by the maximum width $W_{max}$ of the grain higher than $1\mu m^2$.

The lath bainite morphology is obtained thanks to the presence of boron delaying bainitic transformation and thanks to the low temperature coiling. According to the present invention, the lath bainite will be a bainite having an aspect ratio above or equal to 3. The presence between 50% and 80% of lath bainite is beneficial for toughness of the hot rolled steel. Granular bainite presents an aspect ratio below 3.

The rest of microstructure comprises martensite, M-A islands and austenite films, the sum of which being comprised from 15% to 35%, to ensure a uniform elongation above 5%. Above 35% of the sum of martensite, M-A islands and austenite films, the austenite in M-A islands and austenite films become instable and transform into martensite, which leads to a degradation of elongation.

Less than 20% of the fraction of martensite and M-A islands have the multiplication of $L_{max}$ by $W_{max}$ higher than $1\mu m^2$. Above 20%, the M-A islands transform into fresh martensite, leading to a degradation of elongation. Martensite-austenite (M-A) islands have aspect ratio below or equal to 2. These M-A islands develop during coiling. A part of the austenite is transformed in lath bainite as described above. Part of the austenite transforms in martensite generating M-A islands during coiling. A last part of the austenite remains in the final microstructure. Austenite films are austenite between bainite laths with an aspect ratio above or equal to 2. Both M-A islands and austenite films are beneficial for toughness of the hot rolled steel sheet.

The hot-rolled steel sheet according to the invention has Charpy impact energy at 20°C strictly higher than $0.50J/mm^2$ measured according to Standard ISO 148-1:2006 (F) and ISO 148-1:2017(F). The hot rolled steel sheet according to the invention has tensile strength TS above or equal to 1450 MPa, and uniform elongation UE above or equal to 5%. Preferably the hot rolled steel sheet according to the invention has total elongation TE strictly higher than 7%. TS, UE and TE are measured according to ISO standard ISO 6892-1.

The steel sheet according to the invention is produced by the method according to the invention comprising the following steps:

A semi-product able to be further hot-rolled, is provided with the steel composition described above. The semi product is heated to a temperature comprised between 1150°C and 1300°C, so to make it possible to ease hot rolling, with a final hot rolling temperature FRT comprises from 750°C to 900°C Preferably, the FRT is comprised between 800°C and 900°C. When FRT is higher than 900°C, the bainite transformation kinetics slows down significantly during coiling, leading to the formation of a high fraction of martensite, M-A islands and austenite in the final microstructure. In addition, the presence of a large fraction of martensite and M-A islands having $L_{max} * W_{max}$ higher than 1 $\mu m^2$, leads to a degradation in elongation.

The hot-rolled steel is then cooled and coiled at a temperature $T_{coil}$ comprised between (Ms-100°C) and 550°C.

The hot rolled steel sheet is then cooled to room temperature.

After the coiling, the sheet can be pickled to remove oxidation.

An other purpose of the invention is to provide a steel sheet having good weldability. The welded assembly is manufactured by producing two sheets of hot rolled steel, and resistance spot welding the two steel parts.

Spot welding in standard ISO 18278-2 condition have been done on the hot rolled steel sheets.

In the test used, the samples are composed of two sheets of steel in the form of cross welded equivalent. A force is applied so as to break the weld point. This force, known as cross tensile Strength (CTS), is expressed in daN. It depends on the diameter of the weld point and the thickness of the metal, that is to say the thickness of the steel and the metallic coating. It makes it possible to calculate the coefficient $\alpha$ which is the ratio of the value of CTS on the product of the diameter of the welded point multiplied by the thickness of the substrate. This coefficient is expressed in daN/mm$^2$.

The plug ratio is equal to the plug diameter divided by the molten zone diameter.

The resistance spot welds joining the first sheet to the second sheet are characterized by a high resistance in cross-tensile test defined by an $\alpha$ value of at least 50 daN/mm2, and a plug ratio of at least 80%.

The invention will be now illustrated by the following examples, which are by no way limitative.

Example 1

4 grades, whose compositions are gathered in table 1, were cast in semi-products and processed into steel sheets

Table 1 - Compositions

| The tested compositions are gathered in the following table wherein the element contents are expressed in weight percent. | | | | | | | | | | | | | |
|---|---|---|---|---|---|---|---|---|---|---|---|---|---|
| Steel | C | Mn | Si | B | S | P | N | Ti | Nb | Mo | Al | Cr | Ms (°C) |
| A | 0.17 | 3.7 | 1.03 | 0.0019 | 0.001 | 0.014 | 0.004 | 0.025 | 0 | 0.21 | 0.81 | 0.5 | 355 |
| B | 0.19 | 3.9 | 1.27 | 0.0021 | 0.001 | 0.011 | 0.004 | 0.029 | 0.02 | 0.20 | 0.39 | 0 | 330 |
| C | 0.18 | 3.5 | 0.97 | 0 | 0.001 | 0.013 | 0.004 | 0 | 0.03 | 0.20 | 0 | 0 | 345 |
| D | 0.17 | 3.6 | 1.01 | 0 | 0.001 | 0.016 | 0.004 | 0 | 0 | 0 | 0 | 0 | 349 |
| Steels A and B are according to the invention, C and D out of the invention. | | | | | | | | | | | | | |

Table 2 - Process parameters

| Steel semi-products, as cast, were reheated at 1200°C, hot rolled, and coiled. The following specific conditions were applied: | | | |
|---|---|---|---|
| Trial | Steel | FRT (°C) | $T_{coil}$ (°C) |
| 1 | A | 900 | 450 |
| 2 | B | 830 | 450 |
| 3 | B | 845 | 500 |
| 4 | B | 910 | 500 |
| 5 | C | 900 | 450 |
| 6 | D | 900 | 450 |
| Underline values: not corresponding to the invention | | | |

The hot rolled sheets were then analyzed and the corresponding microstructure elements, mechanical properties and weldability properties were respectively gathered in tables 3, 4 and 5.

Table 3 - Microstructure of the hot rolled steel sheet

| The phase percentages of the microstructures of the obtained hot rolled steel sheet were determined: | | | | |
|---|---|---|---|---|
| Trials | Lath Bainite (%) | Martensite + M-A + austenite (%) | Granular Bainite (%) | Fraction of martensite and M-A islands having $L_{max}*W_{max} > 1\mu m^2$ (%) |
| 1 | 75 | 25 | - | 14 |
| 2 | 77 | 23 | - | 12 |
| 3 | 75 | 25 | - | 13 |
| 4 | 60 | 40 | - | 25 |

(continued)

| The phase percentages of the microstructures of the obtained hot rolled steel sheet were determined: | | | | |
|---|---|---|---|---|
| Trials | Lath Bainite (%) | Martensite + M-A + austenite (%) | Granular Bainite (%) | Fraction of martensite and M-A islands having $L_{max}*W_{max} > 1\mu m^2$ (%) |
| <u>5</u> | - | <u>50</u> | <u>50</u> | <u>n.a</u> |
| <u>6</u> | - | <u>60</u> | <u>40</u> | <u>n.a</u> |
| Underlined values: not corresponding to the invention<br>n.a: non-assessed value | | | | |

The surface fractions of phases in the microstructure are determined through the following method: a specimen is cut from the hot rolled, polished and etched with a reagent known per se, to reveal the microstructure. The section is afterwards examined through scanning electron microscope, for example with a Scanning Electron Microscope with a Field Emission Gun ("FEG-SEM") at a magnification greater than 5000x, in secondary electron mode.

The determination of the surface fraction of austenite films and M-A islands is performed thanks to SEM observations after Nital or Picral/Nital reagent etching.

According to the present invention, the lath bainite will be a bainite having an aspect ratio above or equal to 3. According to the invention the M-A islands have an aspect ratio below or equal to 2.

Table 4 - Mechanical properties of the hot rolled steel sheet

| Mechanical properties of the tested samples were determined and gathered in the following table: | | | | |
|---|---|---|---|---|
| Trial | Charpy impact energy (J/mm$^2$) | TS (MPa) | UE (%) | TE(%) |
| 1 | 0.89 | n.a | n.a | n.a |
| 2 | 0.81 | 1492 | 6.6 | 11 |
| 3 | 0.76 | 1522 | 7.4 | 11 |
| <u>4</u> | 0.82 | 1485 | <u>4.1</u> | <u>7</u> |
| 5 | <u>0.31</u> | <u>n.a</u> | <u>n.a</u> | n.a |
| 6 | <u>0.16</u> | <u>n.a</u> | <u>n.a</u> | n.a |
| Underlined values: do not match the targeted values<br>n.a: non-assessed value | | | | |

Table 5 - Weldability properties of the hot rolled steel sheet

| Weldability properties of some samples were determined and gathered in the following table: | | |
|---|---|---|
| Trial | α (daN/mm$^2$) | Plug ratio (%) |
| 1 | 66 | 84 |
| <u>5</u> | <u>45</u> | <u>77</u> |
| <u>6</u> | <u>47</u> | <u>20</u> |
| Underlined values: do not match the targeted values | | |

The examples show that the steel sheets according to the invention, namely examples 1-3 are the only one to show all the targeted properties thanks to their specific composition and microstructures.

In trial 4, the steel sheet is hot rolled with a FRT of 910°C, leading to a high fraction of martensite and M-A islands. This leads to a uniform elongation lower than 5%.

The absence of boron in steels C and D leads to low level of Charpy impact energy in trials 5 and 6, with formation of more than 30% of granular bainite, decreasing the fracture toughness of the steel. Regarding the weldability parameters, the absence of boron, molybdenum and aluminum is detrimental for α and the plug ratio.

**Claims**

1. Hot-rolled steel sheet, made of a steel having a composition comprising, by weight percent:

C : 0.10 - 0.25 %
Mn : 3.5 - 5.0 %
Si: 0.80 - 1.60 %
B: 0.0003 - 0.004 %

$$S \leq 0.010 \text{ \%}$$

$$P \leq 0.020 \text{ \%}$$

$$N \leq 0.008 \text{ \%}$$

$$Ti \leq 0.04 \text{ \%}$$

$$Mo \leq 0.3 \text{ \%}$$

$$Al \leq 0.90 \text{ \%}$$

and comprising optionally one or more of the following elements, in weight percentage:

$$Nb \leq 0.05 \text{ \%}$$

$$Cr \leq 0.80 \text{ \%}$$

the remainder of the composition being iron and unavoidable impurities resulting from the smelting,
said steel sheet having a microstructure comprising, in surface fraction,
- from 50% to 80% of lath bainite, which is bainite having an aspect ratio above or equal to 3, the aspect ratio being the ratio of the maximum length $L_{max}$ of a grain to the maximum width $W_{max}$ of the grain measured at 90° of said maximum length,
- lower than 30% of granular bainite, which is bainite having an aspect ratio below 3,
- the rest being martensite, martensite-austenite M-A islands having an aspect ratio below or equal to 2, and austenite films, which is austenite having an aspect ratio above or equal to 2, the sum of which being from 15% to 35%,
- and less than 20% of said martensite and said M-A islands having the multiplication of the maximum length $L_{max}$ of the grain by the maximum width $W_{max}$ of the grain higher than $1 \mu m^2$.

2. A hot rolled steel sheet according to claim 1 wherein the manganese content is between 3.5% and 4.5%.

3. A hot rolled steel sheet according to anyone of claims 1 and 2 wherein the silicon content is between 1.00% and 1.60%.

4. A hot-rolled steel sheet according to any one of claims 1 to 3, wherein the hot-rolled steel sheet has Charpy impact energy at 20°C strictly higher than $0.50 J/mm^2$.

5. A hot-rolled steel sheet according to any one of claims 1 to 4, wherein the hot-rolled steel sheet has tensile strength TS above or equal to 1450 MPa.

6. A hot-rolled steel sheet according to any one of claims 1 to 5, wherein the hot-rolled steel sheet has uniform elongation UE above or equal to 5%.

7. A method for manufacturing a hot-rolled steel sheet according to claim 1, comprising the following successive steps:

- casting a steel to obtain a semi-product, said semi product having a composition according to claim 1,

- reheating the semi-product at a temperature $T_{reheat}$ comprised between 1150°C and 1300°C,
- hot rolling the semi-product with a finish hot rolling temperature between 750°C and 900°C to obtain a hot-rolled steel sheet,
- cooling the hot rolled steel sheet,
- coiling the hot rolled steel sheet at a coiling temperature $T_{coil}$ comprised between (Ms-100°C) and 550°C so to obtain a coiled steel sheet.

8. Welded assembly comprising two steel parts of the hot rolled steel sheet according to any one of claims 1 to 6, comprising a resistance spot weld having an a value of at least 50 daN/mm2 and a plug ratio of at least 80%.

**Patentansprüche**

1. Warmgewalztes Stahlblech, gefertigt aus einem Stahl, der eine Zusammensetzung aufweist, umfassend in Gewichtsprozent:

   C: 0,10 - 0,25 %
   Mn: 3,5 - 5,0 %
   Si: 0,80 - 1,60 %
   B: 0,0003 - 0,004 % $S \leq 0,010$ %

   $P \leq 0,020$ %

   $N \leq 0,008$ %

   $Ti \leq 0,04$ %

   $Mo \leq 0,3$ %

   $Al \leq 0,90$ %

   und optional umfassend eines oder mehrere der folgenden Elemente in Gewichtsprozent:

   $Nb \leq 0,05$ %

   $Cr \leq 0,80$ %

   wobei der Rest der Zusammensetzung aus Eisen und unvermeidlichen Verunreinigungen besteht, die aus dem Schmelzen resultieren,
   wobei das Stahlblech ein Gefüge aufweist, umfassend in Oberflächenfraktion
   - von 50 % bis 80 % lattenförmiger Bainit, was Bainit ist, der ein Aspektverhältnis von mehr als oder gleich wie 3 aufweist, wobei das Aspektverhältnis das Verhältnis der maximalen Länge $L_{max}$ eines Korns zu der maximalen Breite $W_{max}$ des Korns, gemessen bei 90° der maximalen Länge, ist,
   - weniger als 30 % körniger Bainit, was Bainit ist, der Aspektverhältnis unter 3 aufweist,
   - wobei der Rest Martensit, Martensit-Austenit-M-A-Inseln, die ein Aspektverhältnis von weniger als oder gleich wie 2 aufweisen, und Austenit-Filme, was Austenit ist, der ein Aspektverhältnis von mehr als oder gleich wie 2 aufweist, deren Summe zwischen 15 % und 35 % ist,
   - und weniger als 20 % des Martensits und der M-A-Inseln, bei denen die Multiplikation der maximalen Länge $L_{max}$ des Korns mit der maximalen Breite $W_{max}$ des Korns größer als 1 $\mu m^2$ ist.

2. Warmgewalztes Stahlblech nach Anspruch 1, wobei der Mangangehalt zwischen 3,5 % und 4,5 % ist.

3. Warmgewalztes Stahlblech nach einem der Ansprüche 1 und 2, wobei der Siliziumgehalt zwischen 1,00 % und 1,60 % ist.

4. Warmgewalztes Stahlblech nach einem der Ansprüche 1 bis 3, wobei das warmgewalzte Stahlblech eine Charpy-Kerbschlagarbeit bei 20 °C von strikt mehr als 0,50 $J/mm^2$ aufweist.

5. Warmgewalztes Stahlblech nach einem der Ansprüche 1 bis 4, wobei das warmgewalzte Stahlblech eine Zugfestigkeit TS von mehr als oder gleich wie 1450 MPa aufweist.

6. Warmgewalztes Stahlblech nach einem der Ansprüche 1 bis 5, wobei das warmgewalzte Stahlblech eine gleichmäßige Dehnung UE von mehr als oder gleich wie 5 % aufweist.

7. Verfahren zum Herstellen eines warmgewalzten Stahlblechs nach Anspruch 1, umfassend die folgenden aufeinanderfolgenden Schritte:

- Gießen eines Stahls, um ein Halbzeug zu erlangen, wobei das Halbzeug eine Zusammensetzung nach Anspruch 1 aufweist,
- Wiedererhitzen des Halbzeugs bei einer Temperatur $T_{wiedererhitzen}$ zwischen 1150 °C und 1300 °C,
- Warmwalzen des Halbzeugs mit einer Fertigwarmwalztemperatur zwischen 750 °C und 900 °C, um ein warmgewalztes Stahlblech zu erlangen,
- Abkühlen des warmgewalzten Stahlblechs,
- Wickeln des warmgewalzten Stahlblechs bei einer Wickeltemperatur $T_{wickel}$ zwischen (Ms-100 °C) und 550 °C, um ein gewickeltes Stahlblech zu erlangen.

8. Geschweißte Anordnung, umfassend zwei Stahlteile aus warmgewalztem Stahlblech nach einem der Ansprüche 1 bis 6, umfassend eine Widerstandspunktschweißung, die einen Wert von mindestens 50 daN/mm2 und ein Steckverhältnis von mindestens 80 % aufweist.

**Revendications**

1. Tôle d'acier laminée à chaud, composée d'un acier ayant une composition comprenant, en pourcentage en poids :

C : 0,10 à 0,25 %
Mn : 3,5 à 5 %
Si : 0,80 à 1,60 %
B : 0,0003 à 0,004 % $S \leq 0,010\ \%$

$P \leq 0,020\ \%$

$N \leq 0,008\ \%$

$Ti \leq 0,04\ \%$

$Mo \leq 0,3\ \%$

$Al \leq 0,90\ \%$

et comprenant éventuellement un ou plusieurs des éléments suivants, en pourcentage en poids :

$Nb \leq 0,05\ \%$

$Cr \leq 0,80\ \%$

EP 4 077 744 B1

le reste de la composition étant du fer et des impuretés inévitables qui résultent de la fusion,

ladite tôle d'acier ayant une microstructure comprenant, en fraction de surface,

- de 50 % à 80 % de bainite à lattes, qui est de la bainite ayant un rapport d'aspect supérieur ou égal à 3, le rapport d'aspect étant le rapport entre la longueur maximale $L_{max}$ d'un grain et la largeur maximale $W_{max}$ du grain mesurée à 90° de ladite longueur maximale,

- moins de 30 % de bainite granulaire, qui est de la bainite ayant un rapport d'aspect inférieur à 3,

- le reste étant de la martensite, des îlots de martensite-austénite M-A ayant un rapport d'aspect inférieur ou égal à 2, et des films d'austénite, qui est de l'austénite ayant un rapport d'aspect supérieur ou égal à 2, dont la somme est comprise entre 15 % et 35 %,

- et moins de 20 % de ladite martensite et desdits îlots M-A ayant la multiplication de la longueur maximale $L_{max}$ du grain par la largeur maximale $W_{max}$ du grain supérieure à 1 $\mu m^2$.

2. Tôle d'acier laminée à chaud selon la revendication 1, dans laquelle la teneur en manganèse est comprise entre 3,5 % et 4,5 %.

3. Tôle d'acier laminée à chaud selon l'une quelconque des revendications 1 et 2, dans laquelle la teneur en silicium est comprise entre 1 % et 1,60 %.

4. Tôle d'acier laminée à chaud selon l'une quelconque des revendications 1 à 3, dans laquelle la tôle d'acier laminée à chaud présente une énergie de résilience Charpy à 20°C strictement supérieure à 0,50 J/mm². 

5. Tôle d'acier laminée à chaud selon l'une quelconque des revendications 1 à 4, dans laquelle la tôle d'acier laminée à chaud présente une résistance à la traction TS supérieure ou égale à 1450 MPa.

6. Tôle d'acier laminée à chaud selon l'une quelconque des revendications 1 à 5, dans laquelle la tôle d'acier laminée à chaud présente un allongement uniforme UE supérieur ou égal à 5 %.

7. Procédé de fabrication d'une tôle d'acier laminée à chaud selon la revendication 1, comprenant les étapes successives suivantes :

   - le coulage d'un acier afin d'obtenir un semi-produit, ledit semi-produit ayant une composition selon la revendication 1,
   - la réchauffe du semi-produit à une température $T_{reheat}$ comprise entre 1150°C et 1300°C,
   - le laminage à chaud du semi-produit à une température de laminage à chaud de finition comprise entre 750°C et 900°C afin d'obtenir une tôle d'acier laminée à chaud,
   - le refroidissement de la tôle d'acier laminée à chaud,
   - le bobinage de la tôle d'acier laminée à chaud à une température de bobinage $T_{coil}$ comprise entre (Ms-100°C) et 550°C afin d'obtenir une tôle d'acier bobinée.

8. Ensemble soudé comprenant deux parties en acier de la tôle d'acier laminée à chaud selon l'une quelconque des revendications 1 à 6, comprenant un soudage par points par résistance ayant une valeur d'au moins 50 daN/mm2 et un ratio de déboutonnage d'au moins 80 %.

9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007101921 A

- WO 2018220430 A1